# EUROPEAN PATENT SPECIFICATION

(11) **EP 1 317 331 B1**
(45) Date of publication and mention of the grant of the patent: **13.06.2007**
(21) Application number: 01970045.9
(22) Date of filing: 12.09.2001
(51) Int. Cl.: B24D 18/00, B24D 3/00, B24D 17/00

(54) **METHOD OF MAKING A TOOL INSERT**
VERFAHREN ZUR HERSTELLUNG EINES SCHNEIDEINSATZES
PROCEDE DE FABRICATION D'UN OUTIL INTERCHANGEABLE

(30) Priority: 13.09.2000 GB 0022448
(43) Date of publication of application: 11.06.2003
(73) Proprietor: ELEMENT SIX (PTY) LTD, 1559 Springs (ZA)
(72) Inventor: SANI, Mohammad, Najafi, Berkshire RG12 2R7 (GB)
(74) Representative: Goodfellow, Hugh Robin
(86) International application number: PCT/IB2001/001653
(87) International publication number: WO 2002/022311

(56) References cited:
- EP-A- 0 019 461
- EP-A- 0 744 242
- WO-A-00/20149
- US-A- 6 007 766

## Description

### BACKGROUND OF THE INVENTION

This invention relates to a method of producing a tool insert including at least one ultra-hard abrasive body at an edge thereof (see for example EP-A-0 744 242).

Various types of tool inserts and methods of making such tool inserts are known.

South African Patent No. 84/6619 teaches providing a tungsten carbide substrate with a single recess therein, brazing an abrasive compact, for example a diamond abrasive compact, into the recess, and cutting the product to form a single tipped insert.

European Patent No. 278703 teaches providing a tungsten carbide substrate with a plurality of recesses therein, filling each recess with a layer of abrasive particles, e.g. diamond or cubic boron nitride (CBN) in an organic binder, subjecting the assembly to high temperature/high pressure to bond the abrasive particles together and to the carbide support, and cutting the product to form multiple tipped inserts.

United States Patent No. 5,676,496 teaches a method of producing a multiple tipped insert which is similar to the method of EP 278703, except that the tungsten carbide substrate includes holes which pass right through the substrate, rather than recesses in the substrate.

### SUMMARY OF THE INVENTION

According to the invention, there is provided a method of producing tool insert which includes the steps of:
(a) providing a substrate having a plurality of recesses therein;
(b) placing in each recess an ultra-hard abrasive body of substantially the same size and shape as the recess;
(c) brazing the bodies to the substrate; and
(d) cutting the substrate through the recesses containing the bodies to produce at least one tool insert comprising a section of the substrate to which is bonded at least one ultra-hard abrasive body at an edge thereof.

In step (a) the substrate may, for example, be steel but is preferably a cemented carbide substrate. The recesses may be pre-sintered, i.e. formed in the substrate before sintering, or may be die sunk or ground into the substrate.

The recesses may be of any suitable shape and size, and of any suitable number.

Generally, the recesses are arranged in an ordered pattern to facilitate the cutting step, step (d).

For example, the recesses may be arranged in spaced rows and columns, preferably equidistantly spaced, and may, for example, be circular in shape. Other recess shapes are possible.

The area of the substrate adjacent each recess may be shaped to provide any tool insert cut therefrom with a positive or a negative chip breaker. This may be achieved by providing a region adjacent at least some of the recesses higher or lower than the top exposed surfaces of the abrasive bodies located in those recesses.

The ultra-hard abrasive body is preferably a polycrystalline diamond body, also known as PCD, or a polycrystalline cubic boron nitride body, also known as PCBN or CVD diamond. CVD diamond is diamond produced by chemical vapour deposition.

The body must be of substantially the same size and shape as the recess in which it is to be placed, preferably so as to be a snug fit therein. The top surface of the body may be in the same plane as the surface of the substrate in which the recess is formed or in a different plane where a chip breaker is present, as described above.

The body may be unbacked or backed with a suitable backing layer such as a cemented carbide, e.g. cemented tungsten carbide.

Each recess will generally have a base and side walls. Thus, in step (c), a layer of a suitable braze will typically be located between the base of the recess and a surface of the body and the temperature raised to cause the braze to bond the surface and base together.

A suitable braze for polycrystalline diamond or CVD diamond bodies is a copper/silver alloy braze and for polycrystalline cubic boron nitride bodies a high temperature active braze containing a reactive element such as titanium.

In step (c), the bodies will all preferably be simultaneously brazed into the recesses, e.g. by vacuum brazing, or brazing in a reduced or air controlled atmosphere.

In step (d), the substrate is cut through the recesses containing the bodies, for example by EDM cutting. The cutting may be perpendicular to the substrate surface in which the recesses are formed or at any other angle to this surface.

The result is at least one and generally a plurality of tool inserts each comprising a section of the substrate to which is bonded at least one ultra-hard abrasive body at an edge thereof, and more preferably two or more ultra-hard abrasive bodies at edges thereof. The ultra-hard abrasive bodies will provide cutting edges for the tool insert. Different ultra-hard abrasives may be used for a single insert. This allows for an insert having different ultra-hard abrasive bodies at each or some of the edges to be produced.

After step (d), the tool inserts, if required, may be processed to ensure that the ultra-hard abrasive bodies are flush with a surface of the substrate.

The tool inserts produced by the method of the invention may be used in tools for cutting, machining, drilling or abrading of workpieces and may also be used as a wear part.

### BRIEF DESCRIPTION OF THE DRAWINGS

- **Figure 1**: is a sectioned side view of a substrate including a plurality of recesses, each recess containing an ultra-hard abrasive body;
- **Figure 2**: is a plan view of the substrate of Figure 1;
- **Figure 3**: is a plan view of a further embodiment of a substrate including a plurality of recesses, each recess containing an ultra-hard abrasive body;
- **Figure 4**: is a section through an insert cut from a substrate of Figure 3;
- **Figure 5**: is a plan view of a further embodiment of a substrate including a plurality of recesses, each recess containing an ultra-hard abrasive body;
- **Figure 6**: is a section through an insert cut from a substrate of Figure 5;
- **Figure 7**: is a plan view of a further embodiment of a substrate including a plurality of recesses, each recess containing an ultra-hard abrasive body;
- **Figure 8**: is a section through one form of an insert cut from a substrate of Figure 7; and
- **Figure 9**: is a section through another form of an insert cut from a substrate of Figure 8.

### DESCRIPTION OF EMBODIMENTS

The crux of the invention is a method of producing a tool insert or, more generally, a plurality of similar tool inserts in a single brazing operation. The method includes the steps of providing a substrate, the substrate having a plurality of recesses therein; placing in each recess an ultra-hard abrasive body, e.g. PCD, PCBN or CVD diamond of substantially the same size and shape as the recess; brazing the bodies to the substrate; and cutting the substrate through the recesses containing the bodies to produce at least one tool insert, each tool insert comprising a section of the substrate to which is bonded at least one ultra-hard abrasive body at an edge thereof.

The substrate is preferably made of cemented carbide such as cemented tungsten carbide, cemented tantalum carbide or cemented molybdenum carbide.

Embodiments of the invention will now be described with reference to the accompanying drawings.

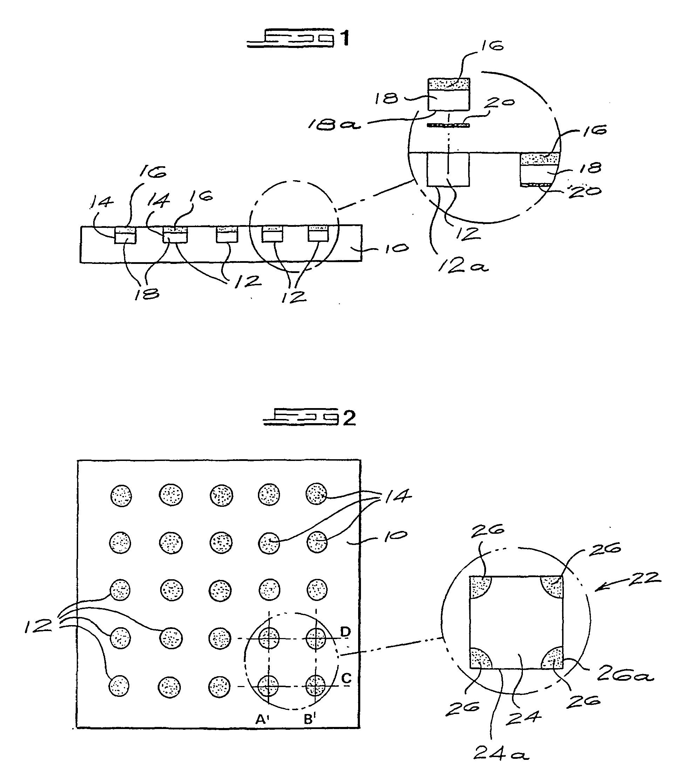

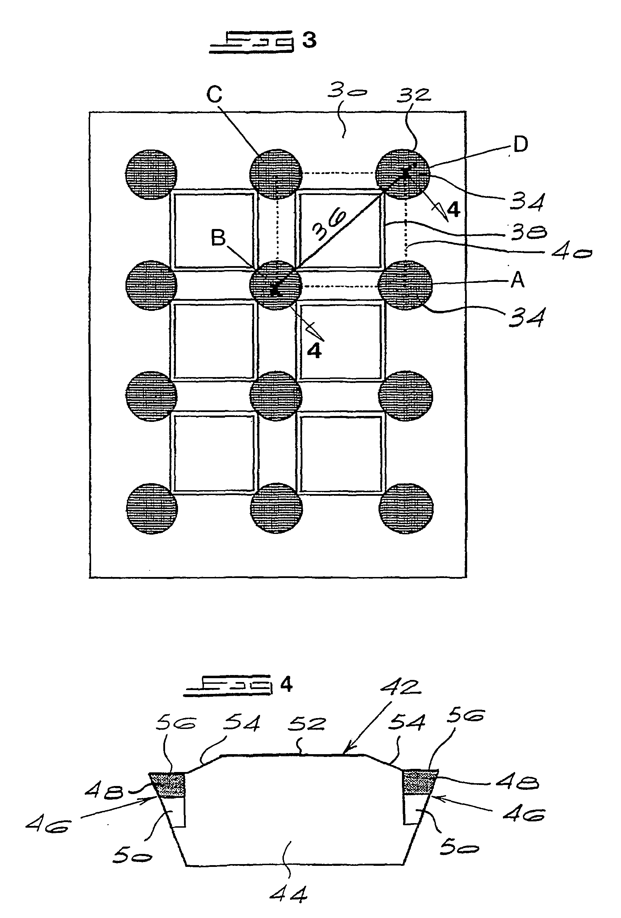

Referring first to Figures 1 and 2, there is shown a cemented tungsten carbide substrate 10 having a plurality of pre-sintered recesses 12 formed therein.

There is located in each recess 12 a polycrystalline ultra-hard abrasive body 14 consisting of an ultra-hard abrasive layer 16 and a backing layer 18 of cemented tungsten carbide.

Located between the base 12a of each recess 12 and the base 18a of each body 14 is a layer 20 of a braze.

Once the bodies 14 are all located in the recesses 12 in the substrate 10, the whole assembly is brazed, i.e. heated, in an air controlled atmosphere or vacuum depending on the braze alloy used to bond the bodies 14 to the substrate 10.

Thereafter, the substrate 10 is cut through the recesses 12 containing the bodies 14 to produce one, and preferably a plurality of tool inserts. For example, referring to Figure 2, the substrate 10 may be cut along the lines A, B, C and D to produce a tool insert 22 consisting of a section 24 of the substrate 10 to which are bonded four abrasive bodies 26 at each of the four corners of the section 24.

It can be seen that if the lines A, B, C, D are extended, and if similar cutting lines are made through the remainder of the substrate 10 and bodies 14, a plurality of substantially similar tool inserts 22 can be produced.

After the tool insert 22 has been cut from the substrate 10, the abrasive bodies 26 may be lapped so that they have outer surfaces 26a flush with the outer surfaces 24a of section 24 of the substrate 10. Each abrasive body 26 provides a cutting edge and cutting point for the tool insert 22,

The tool insert 22 may be used as an insert for a conventional cutting tool.

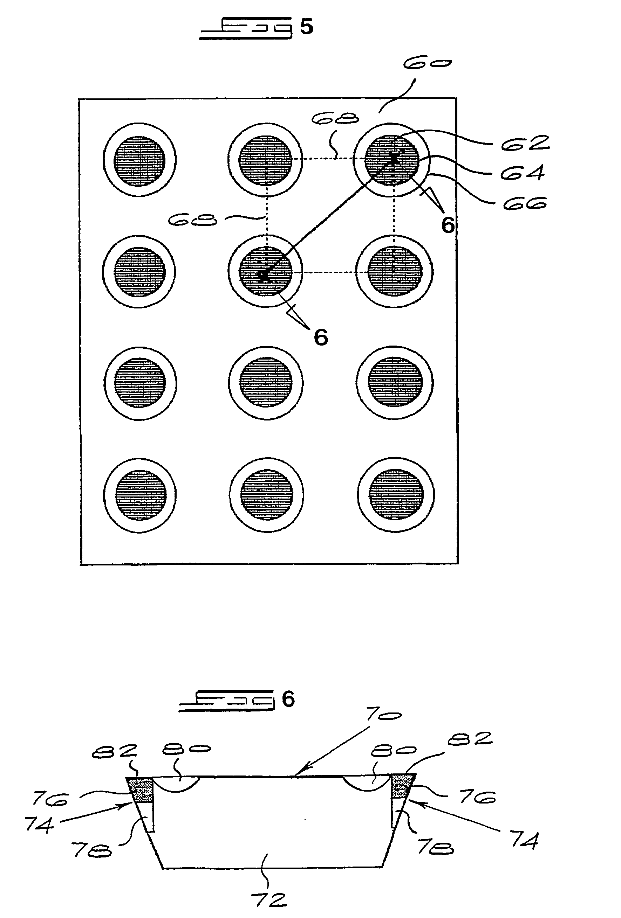

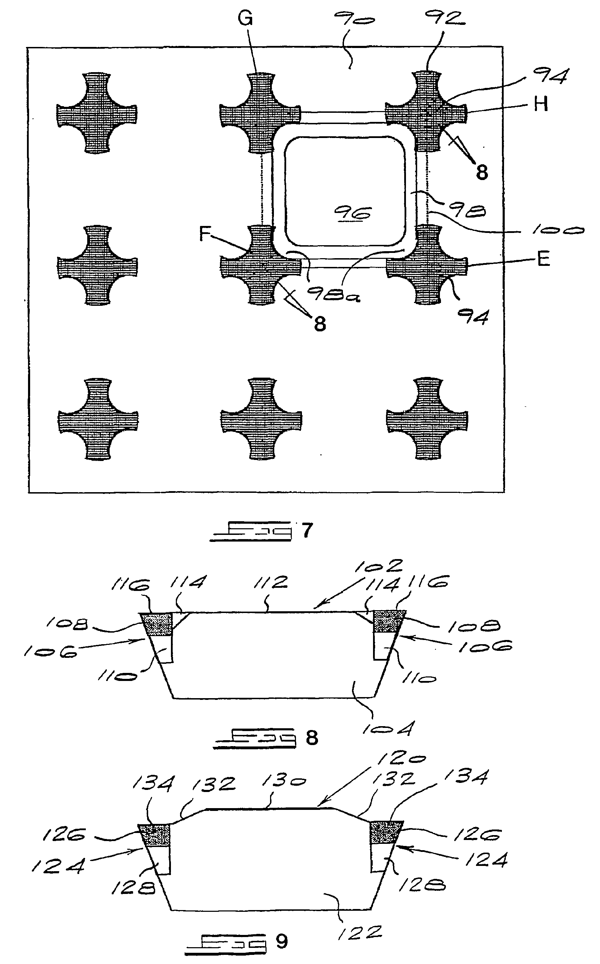

A second embodiment of the invention is illustrated by Figures 3 and 4. Referring to these Figures, a cemented carbide substrate 30 has a plurality of recesses 32 formed therein and abrasive bodies 34 placed in each recess and brazed to the substrate in the same manner as described above for the embodiment of Figures 1 and 2. Between each four adjacent recesses, e.g. those indicated as A, B, C and D, is a surface 36 of the substrate which is raised relative to the top exposed surface of the bodies. The surface 36 is bounded by sloping surfaces 38.

A tool insert may be produced from the substrate 30 by cutting along the dotted lines 40. The resulting tool insert 42 is shown in section by Figure 4, the section being along the line 4-4 of Figure 3. The tool insert 42 comprises a cemented carbide section 44 having an abrasive body 46 located in each corner thereof. Each abrasive body 46 comprises a polycrystalline diamond or CBN layer 48 bonded to a cemented carbide support 50.

The section 44 has a portion defined by upper flat surface 52 and sloping surfaces 54 which is raised relative to the top exposed surface 56 of layer 48. This portion acts as a positive chip breaker for the tool insert, in use.

A further embodiment is illustrated by Figures 5 and 6. Referring to these Figures, a cemented carbide substrate 60 is provided. Abrasive bodies 62 are located in recesses 64 in the substrate and brazed to the substrate in the same manner described above in relation to the embodiment of Figures 1 and 2.

In this embodiment, each recess 60 is surrounded by a shallow groove or depression 66.

One or more tool inserts may be produced from the substrate 60 by cutting along the dotted lines 68. A section of a tool insert 70 thus produced is shown by Figure 6, the section being along line 6-6 of Figure 5.

Tool insert 70 comprises a cemented carbide section 72 having an abrasive body 74 located in each corner thereof. Each abrasive body 74 comprises a polycrystalline diamond or CBN layer 76 bonded to a cemented carbide support 78. A depression or groove 80 lies adjacent the top exposed surface 82 of each layer 76. This depression or groove functions as a negative chip breaker.

A further embodiment is illustrated by Figures 7 and 8. Referring to these Figures, a cemented carbide substrate 90 has a plurality of shaped recesses 92 formed therein and similarly shaped abrasive bodies 94 placed in each recess and brazed to the substrate in the same manner as described above for the embodiment of Figure 1 and 2. Between each four adjacent recesses, e.g. those indicated as E,F,G and H is a surface 96 of the substrate which is bounded by a shallow groove or depression 98. The recesses 92 are shaped such that the corners of the groove or depression 98a are each partially surrounded by the recess 92.

A tool insert may be produced from the substrate 90 by cutting along the dotted lines 100. The resulting tool insert 102 is shown in section by Figure 8, the section being along the lines 8-8 of Figure 7. The tool insert 102 comprises a cemented carbide section 104 having an abrasive body 106 located in each corner thereof. Each abrasive body 106 comprises a polycrystalline diamond or CBN layer 108 bonded to a cemented carbide support 110. A groove or depression 114 lies adjacent the top exposed surface 116 of each layer 108. This groove or depression functions as a negative chip breaker.

Figure 9 illustrates a section of an alternative embodiment of a tool insert which can be cut from the substrate of Figure 7. For this embodiment, the surface 96 is raised relative to the top surface of the abrasive bodies 94 and the groove or depression 98 is replaced by sloping surfaces.

A tool insert may be produced from the substrate 90 by cutting along the dotted lines 100. The resulting tool insert 120 is shown in section by Figure 9, the section being along the lines 8-8 of Figure 7. The tool insert 120 comprises a cemented carbide section 122 having an abrasive body 124 located in each corner thereof. Each abrasive body 124 comprises a polycrystalline diamond or CBN layer 126 bonded to a cemented carbide support 128. The section 122 has a portion defined by upper flat surface 130 and sloping surface 132 which is raised relative to the top exposed surface 134 of layer 126. This acts as a positive chip breaker for the tool insert, in use.

It will be noted in the embodiments of Figures 3 to 9 that the cemented carbide substrates are shown as being cut at an angle other than 90° to the top and bottom surfaces of the substrates. Cutting may be effected at other angles to these surfaces.

An advantage of the invention is that a plurality of tool inserts may be prepared simultaneously in a simple and economical manner.

## Claims

1. A method of producing tool insert which includes the steps of:
(a) providing a substrate (10) having a plurality of recesses (12) therein:
(b) placing in each recess (12) an ultra-hard abrasive body (14) of substantially the same size and shape as the recess; **characterised by** the following steps:
(c) brazing the bodies to the substrate (10); and
(d) cutting the substrate (10) through the recesses (12) containing the bodies to produce at least one tool insert (22) comprising a section of the substrate (10) to which is bonded at least one ultra-hard abrasive body (14) at an edge thereof.

2. A method according to claim 1 wherein in step (d) a plurality of tool inserts (22) are produced.

3. A method according to claim 1 or claim 2 wherein the or each tool insert (22) comprises a section of the substrate (10) having two or more abrasive bodies (14) at edges thereof.

4. A method according to any one of the preceding claims wherein a layer (20) of a braze is located between a base (12a) of the recess (12) and a surface of the body (14) and the temperature raised to cause the braze to bond the surface and base (12a) together.

5. A method according to claim 4 wherein the brazing is vacuum brazing or brazing in a reduced or air controlled atmosphere.

6. A method according to any one of the preceding claims wherein bodies (14) are simultaneously brazed into the recesses (12).

7. A method according to any one of the preceding claims wherein the recesses (12) are arranged in an ordered pattern.

8. A method according to any one of the preceding claims the recesses (12) are arranged in spaced rows and columns.

9. A method according to any one of the preceding claims wherein the abrasive bodies (62) in the recesses (64) have exposed top surfaces and the substrate in a region (66) adjacent at least some of the recesses (64) is lower than the top surfaces of the abrasive bodies (62) so as to provide the tool insert (70) with a negative chip breaker surface adjacent at least some of the abrasive bodies.

10. A method according to any one of claims 1 to 8 wherein the abrasive bodies (34) in the recesses (32) have exposed top surfaces and the substrate (30) in a region (36) adjacent at least some of the recesses (32) is higher than the top surfaces of the abrasive bodies (34) so as to provide the tool insert (42) with a positive chip breaker surface (36) adjacent at least some of the abrasive bodies.

11. A method according to any one of the preceding claims wherein the ultra-hard abrasive bodies (14) are PCD, PCBN or CVD diamond.

12. A method according to any one of the preceding claims wherein the substrate (10) is made of cemented carbide.

## Patentansprüche

1. Verfahren zur Herstellung von Werkzeugeinsätzen einschließlich der folgenden Schritte:
(a) Bereitstellung eines Substrats (10) mit mehreren darin befindlichen Aussparungen (12);
(b) Einsetzen eines ultraharten Schleifkörpers (14) in jede Aussparung (12), der im Wesentlichen die gleiche Größe und Form hat wie die Aussparung, **gekennzeichnet durch** die folgenden Schritte;
(c) Hartlöten der Körper auf das Substrat (10);
(d) Schneiden des Substrats (10) **durch** die Aussparungen (12), die die Körper beinhalten, um mindestens einen Werkzeugeinsatz (22) herzustellen, umfassend einen Bereich des Substrats (10), an dessen Kanten sich mindestens ein ultraharter Schleifkörper (14) befindet.

2. Verfahren nach Anspruch 1, wobei bei Schritt (d) mehrere Werkzeugeinsätze (22) hergestellt werden.

3. Verfahren nach Anspruch 1 oder 2, wobei der oder jeder Werkzeugeinsatz (22) einen Bereich des Substrats (10) mit zwei oder mehr Schleifkörpern (14) an dessen Kanten umfasst.

4. Verfahren nach einem der vorhergehenden Ansprüche, wobei sich eine Schicht (20) einer Hartlötung zwischen einer Basis (12a) der Aussparung (12) und einer Oberfläche des Körpers (14) befindet und die Temperatur erhöht wird, damit die Hartlötung die Oberfläche mit der Basis (12a) verbindet.

5. Verfahren nach Anspruch 4, wobei das Hartlöten eine Vakuumhartlötung oder eine Hartlötung in einer reduzierten oder luftkontrollierten Atmosphäre ist.

6. Verfahren nach einem der vorhergehenden Ansprüche, wobei die Körper (14) gleichzeitig in die Aussparungen (12) eingelötet werden.

7. Verfahren nach einem der vorhergehenden Ansprüche, wobei die Aussparungen (12) in einem geordneten Muster angeordnet sind.

8. Verfahren nach einem der vorhergehenden Ansprüche, wobei die Aussparungen (12) in Reihen und Spalten mit dazwischen befindlichen Abständen angeordnet sind.

9. Verfahren nach einem der vorhergehenden Ansprüche, wobei die Schleifkörper (62) in den Aussparungen (64) freiliegende obere Flächen aufweisen und das Substrat in dem Bereich (66) neben mindestens einigen Aussparungen (64) niedriger ist als die oberen Flächen der Schleifkörper (62), um den Werkzeugeinsatz (70) mit einer negativen spanbrechenden Oberfläche neben mindestens einigen der Schleifkörper auszustatten.

10. Verfahren nach einem der Ansprüche 1 bis 8, wobei die Schleifkörper (34) in den Aussparungen (32) freiliegende obere Flächen aufweisen und das Substrat (30) in dem Bereich (36) neben mindestens einigen Aussparungen (32) höher ist als die oberen Flächen der Schleifkörper (34), um den Werkzeugeinsatz (42) mit einer positiven spanbrechenden Oberfläche (36) neben mindestens einigen Schleifkörpern auszustatten.

11. Verfahren nach einem der vorhergehenden Ansprüche, wobei die ultraharten Schleifkörper (14) aus PKD, PKB oder CVD-Diamant hergestellt sind.

12. Verfahren nach einem der vorhergehenden Ansprüche, wobei das Substrat (10) aus Hartmetall hergestellt ist.

## Revendications

1. Procédé de fabrication d'une plaquette pour outil qui comprend les étapes consistant à :
(a) fournir un substrat (10) comportant une pluralité d'évidements (12) ;
(b) placer dans chaque évidement (12) un corps abrasif ultra-dur (14) de taille et forme sensiblement similaires à celles de l'évidement ; **caractérisé par** les étapes suivantes :
(c) braser les corps sur le substrat (10) ; et
(d) découper le substrat (10) à travers les évidements (12) contenant les corps pour produire au moins une plaquette pour outil (22) comprenant une section du substrat (10) sur laquelle est collé au moins un corps abrasif ultra-dur (14) au niveau d'un bord de celle-ci.

2. Procédé selon la revendication 1 dans lequel une pluralité de plaquettes pour outil (22) sont produites dans l'étape (d).

3. Procédé selon la revendication 1 ou la revendication 2 dans lequel la ou chaque plaquette pour outil (22) comprend une section du substrat (10) comportant deux corps abrasifs (14) ou plus au niveau des bords de celle-ci.

4. Procédé selon l'une quelconque des revendications précédentes dans lequel une couche (20) d'une brasure est située entre une base (12a) de l'évidement (12) et une surface du corps (14) et la température est augmentée pour amener la brasure à coller la surface et la base (12a) ensemble.

5. Procédé selon la revendication 4 dans lequel le brasage est un brasage fort sous vide ou un brasage dans une atmosphère réduite ou à air contrôlé.

6. Procédé selon l'une quelconque des revendications précédentes dans lequel des corps (14) sont simultanément brasés dans les évidements (12).

7. Procédé selon l'une quelconque des revendications précédentes dans lequel les évidements (12) sont agencés sous forme de structure ordonnée.

8. Procédé selon l'une quelconque des revendications précédentes dans lequel les évidements (12) sont agencés dans des rangées et des colonnes espacées.

9. Procédé selon l'une quelconque des revendications précédentes dans lequel les corps abrasifs (62) dans les évidements (64) ont des surfaces supérieures exposées et le substrat dans une zone (66) adjacente à au moins une partie des évidements (64) est plus bas que les surfaces supérieures des corps abrasifs (62) de manière à fournir à la plaquette pour outil (70) une surface de broyeur de copeaux négative adjacente à au moins une partie des corps abrasifs.

10. Procédé selon l'une quelconque des revendications 1 à 8 dans lequel les corps abrasifs (34) dans les évidements (32) ont des surfaces supérieures exposées et le substrat (30) dans une zone (36) adjacente à au moins une partie des évidements (32) est plus haut que les surfaces supérieures des corps abrasifs (34) de manière à fournir à la plaquette pour outil (42) une surface de broyeur de copeaux positive (36) adjacente à au moins une partie des corps abrasifs.

11. Procédé selon l'une quelconque des revendications précédentes dans lequel les corps abrasifs ultra-durs (14) sont le PCD, le PCBN ou le diamant CVD.

12. Procédé selon l'une quelconque des revendications précédentes dans lequel le substrat (10) est réalisé en carbure cémenté.
